# EUROPÄISCHE PATENTSCHRIFT

(11) **EP 0 804 951 B1**
(45) Veröffentlichungstag und Bekanntmachung des Hinweises auf die Patenterteilung: **11.09.2002**
(21) Anmeldenummer: 97106627.9
(22) Anmeldetag: 22.04.1997
(51) Int. Cl.: B01D 3/14, B01D 3/32

(54) **Trennwandkolonne zur kontinuierlichen destillativen Zerlegung von Mehrstoffgemischen**
Rectification column for the continuous distillative separation of a multi-substance mixture
Colonne de rectification pour la séparation en continu par distillation d'un mélange de substances multiples

(30) Priorität: 30.04.1996 DE 19617210
(43) Veröffentlichungstag der Anmeldung: 05.11.1997
(73) Patentinhaber: BASF Aktiengesellschaft, 67063 Ludwigshafen (DE)
(72) Erfinder: Kaibel, Gerd, Dr., 68623 Lampertheim (DE); Stroezel, Manfred, 68549 Ilvesheim (DE); Rheude, Udo, Dr., 67166 Otterstadt (DE)

(56) Entgegenhaltungen:
- EP-A- 0 640 367
- DE-A- 4 336 983
- DE-A- 4 336 985

## Beschreibung

Die vorliegende Erfindung betrifft eine neue Trennwandkolonne zur destillativen Auftrennung eines Gemisches in drei oder mehrere Fraktionen sowie ein verbessertes Verfahren zur destillativen Auftrennung von Gemischen.

Für die kontinuierliche destillative Zerlegung von Mehrstoffgemischen sind verschiedene Verfahrensvarianten gebräuchlich. Im einfachsten Fall wird das Zulaufgemisch in 2 Fraktionen, eine leichtsiedende Kopffraktion und eine hochsiedende Sumpffraktion, zerlegt. Bei der Auftrennung von Zulaufgemischen in mehr als 2 Fraktionen müssen nach dieser Verfahrensvariante mehrere Destillationskolonnen eingesetzt werden. Um den apparativen Aufwand zu begrenzen, setzt man bei der Auftrennung von Vielstoffgemischen nach Möglichkeit Kolonnen mit dampfförmigen oder flüssigen Seitenabzügen ein. Die Anwendungsmöglichkeit von Destillationskolonnen mit Seitenabzügen ist jedoch dadurch stark eingeschränkt, daß die an den Seitenentnahmestellen entnommenen Produkte nie völlig rein sind. Bei Seitenentnahmen im Verstärkungsteil, die üblicherweise in flüssiger Form erfolgen, enthält das Seitenprodukt noch Anteile an leichtsiedenden Komponenten, die über Kopf abgetrennt werden sollen. Entsprechendes gilt für Seitenentnahmen im Abtriebsteil, die meist dampfförmig erfolgen, bei denen das Seitenprodukt noch Hochsiederanteile aufweist. Die Anwendung von konventionellen Seitenabzugskolonnen ist daher auf Fälle begrenzt, in denen verunreinigte Seitenprodukte zulässig sind.

Eine Abhilfemöglichkeit bieten hier Trennwandkolonnen. Dieser Kolonnentyp ist in der deutschen Offenlegungssschrift DE 3302525 A1 sowie in der Fachliteratur, beispielsweise in Chem. Eng. Technol. 10 (1987) Seite 92 - 98 und in Chem. Ing. - Tech. 61 (1989) Nr. 2 Seite 104 - 112, beschrieben. Bei dieser Kolonnenbauart ist es möglich, Seitenprodukte ebenfalls in reiner Form zu entnehmen. Hierdurch verringert sich bei der Auftrennung von Vielkomponentengemischen die Zahl der insgesamt benötigten Destillationskolonnen. Da dieser Kolonnentyp eine apparative Vereinfachung von thermisch gekoppelten Destillationskolonnen darstellt, weist er darüberhinaus auch einen besonders niedrigen Energieverbrauch auf. Eine Beschreibung von thermisch gekoppelten Destillationskolonnen findet sich ebenfalls in den genannten Stellen der Fachliteratur. Trennwandkolonnen bieten gegenüber der Anordnung von konventionellen Destillationskolonnen sowohl hinsichtlich des Energiebedarfs als auch der Investitionskosten Vorteile von etwa 30 % und werden daher zunehmend industriell eingesetzt.

Nachteilig für den Einsatz von Trennwandkolonnen ist, daß sie infolge der in der Kolonne angebrachten Trennwand eine gegenüber konventionellen Kolonnen abweichende mechanische Ausführung aufweisen. Eine nachträgliche Umrüstung ist mit einem beträchtlichen Aufwand und Stillstandzeiten verbunden. Die Anwendung von Trennwandkolonnen beschränkt sich daher bislang vorwiegend auf neu errichtete Kolonnen. Bei einer nachträglichen Umrüstung weicht man häufig auf die Kompromißlösung einer thermisch gekoppelten Kolonne aus.

Der Erfindung lag daher die Aufgabe zugrunde, den genannten Nachteilen abzuhelfen und die Umrüstung bestehender Trennwandkolonnen sowie die Neuanfertigung von Trennwandkolonnen weiter zu vereinfachen.

Demgemäß wurde eine Trennwandkolonne zur destillativen Auftrennung eines Gemisches in drei oder mehrere Fraktionen gefunden, welche dadurch gekennzeichnet ist, daß innerhalb der Trennwandkolonne mindestens eine Trennwand lösbar angebracht ist. Weiterhin wurden Verfahren zur destillativen Auftrennung von Gemischen unter Verwendung der erfindungsgemäßen Trennwandkolonne gefunden.

Im folgenden werden die erfindungsgemäßen Trennwandkolonnen anhand der Zeichnungen näher beschrieben.

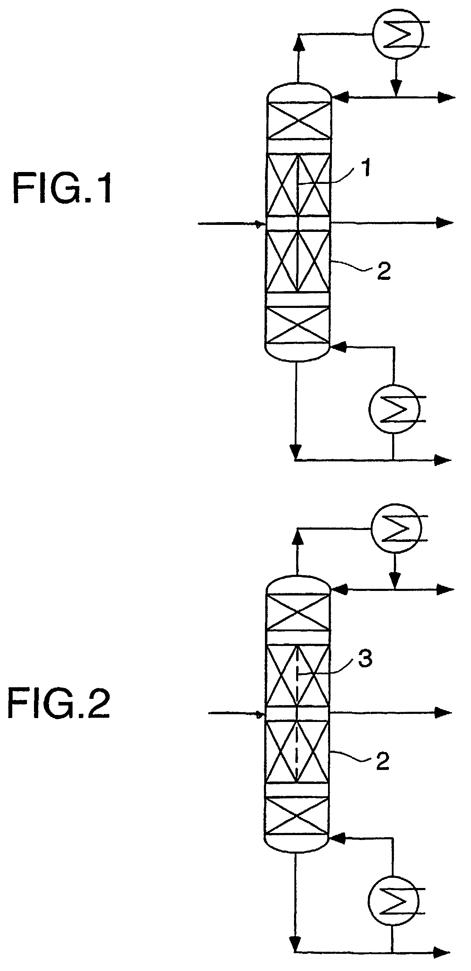

Figur 1 zeigt eine Trennwandkolonne (2) mit fest angebrachter Trennwand (1), wie sie bisher üblicherweise eingesetzt wird.

Figur 2 zeigt eine erfindungsgemäße Trennwandkolonne (2) mit mehreren, übereinander angeordneten lösbaren Trennwänden (3).

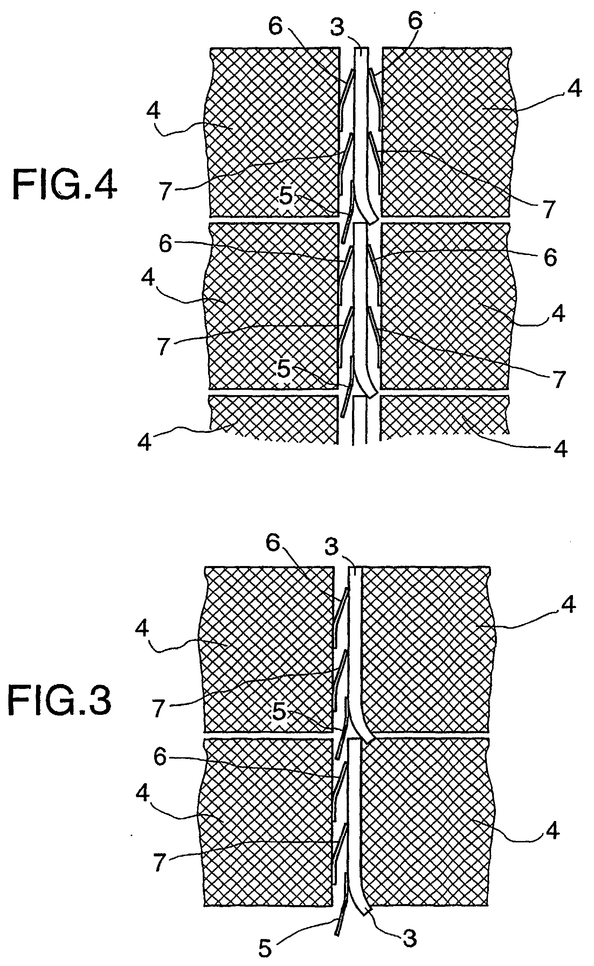

Erfindungsgemäß wird eine spezielle konstruktive Ausgestaltung bereitgestellt, die die Anbringung von Trennwänden in der Kolonne erübrigt. Diese erfindungsgemäße Trennwandkolonne mit ggf. Packungen weist keine in dem Kolonnenkörper fest angebrachte, beispielsweise eingeschweißte, Trennwände auf. Eine erste konstruktive Möglichkeit besteht darin, daß die in Längsrichtung wirksame Unterteilung von Flüssigkeits- und Brüdenströmen durch an der geordneten Kolonnenpackung direkt angebrachte Trennelemente bewirkt wird (Fig. 3). Die Trennwand 3 ist damit ein in die Packung 4 integriertes Bauelement und wird mit ihr fest verbunden. Die Wandstärke dieses mit der Packung verbundenen Bleches 3 kann mit ca. 0,1 bis 3, bevorzugt 1 bis 2 mm, deutlich kleiner gehalten werden als dies bei einer im Kolonnenkörper fest angebrachten Trennwand der Fall wäre, bei der die bevorzugte Wandstärke 5 - 10 mm beträgt. Diese Packungen führen speziell bei der Umrüstung bereits vorhandener konventioneller Kolonnen zu einer Kosteneinsparung sowie zu kurzen Umrüstungszeiten.

Für die Abdichtung aufeinanderfolgender Packungslagen empfiehlt sich eine dachförmige Ausformung der in die Packung integrierten Trennwand. Fig. 3 zeigt eine einfache konstruktive Lösung, bei der die integrierte Trennwand 3 am unteren und oberen Ende um etwa 1 bis 10 mm länger ausgeführt ist als die mit ihr verbundene Packung 4 und am unteren Ende einen etwa 10 bis 20 mm breiten und etwa 0,1 bis 2 mm dicken zusätzlichen Blechstreifen 5 aufweist. Bei der Montage der einzelnen Packungslagen entsteht eine dachförmige Überlappung, die ein Übertreten von Flüssigkeit verhindert und auch gegenüber den Brüden eine ausreichend hohe Dichtigkeit aufweist. Alternativ zu dieser konstruktiv besonders einfachen Lösung sind auch andere in der Technik gebräuchliche Maßnahmen zur Abdichtung möglich.

Eine weitere noch einfachere Möglichkeit sieht vor, die Trennwand nicht in die Packung zu integrieren, sondern als loses etwa 0,5 bis 3 mm, bevorzugt 1 bis 2 mm starkes Blech 3 lose zwischen den einzelnen Packungen 4 anzubringen (Fig. 4). Die Packungen können dabei in derselben Ausführung mit Flüssigkeitsabweisern 6 und Abstandshaltern 7 zum Einsatz kommen, wie dies bei konventionellen starr angebrachten Trennwänden der Fall ist. Auch hier ist es vorteilhaft, Blechstreifen 5 anzubringen, um eine Abdichtung zu bewirken. Die einzelnen Bleche 3 können mit einer den Packungslagen entsprechenden Höhe, gegebenenfalls aber auch höher ausgeführt werden.

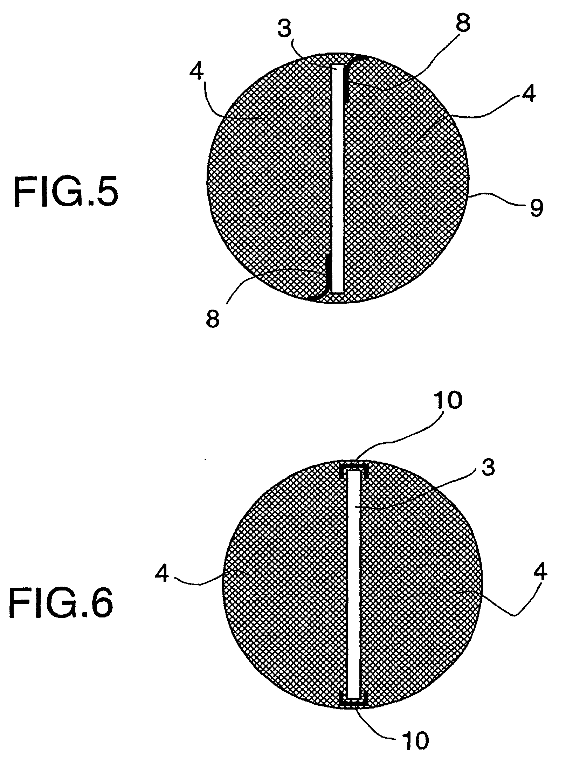

Wie Ergebnisse an technisch ausgeführten Kolonnen zeigen, kann bei großen Kolonnendurchmessern mit ausreichender Rundheit und mäßigen Reinheitsanforderungen für die Mittelsiederfraktion auf eine seitliche Abdichtung durch Dichtelemente verzichtet werden. Sie ist nur bei stark unrunden Kolonnenschüssen und Produktspezifikationen für die Mittelsiederfraktion, die über etwa 99,8 % liegen, erforderlich. Als Spaltweite zwischen der integrierten Trennwand und der Kolonnenwand sollten 1 bis 2 mm nicht überschritten werden. Wenn eine seitliche Abdichtung erforderlich ist, bietet sich als einfache Möglichkeit die Anbringung einer federnden Dichtlippe 8 aus einem dünnen Blech an, die eine Abdichtung zur Kolonnenwand 9 bewirkt (Fig. 5).

Am wirksamsten läßt sich eine Verunreinigung der Mittelsiederfraktion durch leichter- oder schwerersiedende Komponenten infolge einer nicht völligen Abdichtung der an den Packungslagen angebrachten Trennwände dadurch verhindern, daß längs der Kolonnenhöhe der Druck auf beiden Seiten der Längsunterteilung so beeinflußt wird, daß der Druck auf der Entnahmeseite stets etwas größer oder gleich groß ist wie auf der Zulaufseite. Dies läßt sich einfach dadurch erreichen, daß auf der Entnahmeseite die Packungen höher enden, eine größere Packungshöhe aufweisen oder einen höheren Druckverlust besitzen - beispielsweise infolge engerer Strömungsquerschnitte in der Packung - als auf der Zulaufseite.

Es ist auch möglich, konventionelle Packungslagen ohne eine integrierte Trennwand zu benutzen und die Trennwände separat, bevorzugt lose, in dem Kolonnenkörper anzubringen. Besonders einfach ist es, an den Kolonnenwänden U-förmige Führungsschienen 10 anzubringen, in die die Trennwände 3 eingeschoben werden (Fig. 6). In diesem Fall können die Trennwände länger ausgeführt werden, beispielsweise mit einer Länge von 1 bis 2 m, um ihre Zahl klein zu halten. Die Wandstärke sollte etwa 3 bis 10 mm betragen, um eine ausreichende Steifigkeit zu erzielen.

Es ist bei dieser Ausführung der Trennwände auch möglich, ungeordnete Packungen, beispielsweise Pall-Ringe, einzusetzen. Falls die losen Trennwände außerhalb der Mitte des Kolonnenquerschnitts angebracht werden sollen, ist eine Führung in jedem Fall erforderlich, da sonst die ausreichende Seitenabdichtung nicht gewährleistet ist.

Im Bereich der Flüssigkeitssammler und Flüssigkeitsverteiler zwischen den einzelnen Packungslagen ist es am günstigsten, jeweils ein einziges Blechstück als Längsunterteilung vorzusehen.

Bei Bodenkolonnen ist die Anbringung von Längsunterteilungen bei Dual-Flow-Böden am einfachsten. Hier genügen rechteckige ebene Bleche, die beispielsweise in U-förmige Führungsschienen eingeschoben werden, die an der Kolonnenwand sowie auf der Oberseite des Bodens und/oder auf der Unterseite des Bodens angebracht werden.

Siebböden, Ventilböden und Glockenböden machen eine aufwendigere Geometrie der Längsunterteilung erforderlich, da auch der Ablaufschacht unterteilt werden muß. Die konstruktive Ausführung ist am einfachsten, wenn die Längsunterteilungen jeweils senkrecht zu den Wehren angeordnet werden.

Bei dem destillativen Verfahren zur Auftrennung eines Gemisches unter Verwendung der erfindungsgemäßen Trennwandkolonne betreibt man die Trennwandkolonne bevorzugt so, daß der Druck auf der Entnahmeseite größer oder gleich groß ist wie auf der Zulaufseite.

## Patentansprüche

1. Trennwandkolonne zur destillativen Auftrennung eines Gemisches in 3 oder mehrere Fraktionen, **dadurch gekennzeichnet, daß** innerhalb der Trennwandkolonne mindestens eine Trennwand lösbar angebracht ist.

2. Trennwandkolonne nach Anspruch 1, **dadurch gekennzeichnet, daß** die Trennwand bzw. Trennwände lose in Führungsschienen an den Kolonnenwandungen angebracht sind.

3. Trennwandkolonne nach Ansprüchen 1 bis 2, **dadurch gekennzeichnet, daß** die Trennwandkolonne Packungen zur Gemischauftrennung enthält.

4. Trennwandkolonne nach Ansprüchen 1 bis 3, **dadurch gekennzeichnet, daß** die Trennwandkolonne geordnete Packungen enthält, bei denen die als Längsunterteilung wirkenden Trennwände jeweils auf einer Seite der Packungslage als 0,1 bis 3 mm dicke Bleche angebracht sind.

5. Trennwandkolonne nach Anspruch 4, **dadurch gekennzeichnet, daß** diese Bleche am oberen oder unteren Ende 1 bis 10 mm über die Packungslage hinausreichen, am unteren Ende des Bleches einen 10 bis 20 mm breiten und 0,1 bis 2 mm dicken Blechstreifen aufweisen, der nur an seinem oberen Rand mit der Trennwand so verbunden ist, daß bei aufeinandergestapelten Packungslagen eine dachförmige, zumindest teilweise dichtende Überlappung entsteht, die ein Übertreten von Flüssigkeit von der einen auf die andere Seite der Trennwand verhindert und auch gegen ein Übertreten von Brüden eine ausreichende hohe Dichtigkeit aufweist.

6. Trennwandkolonne nach Ansprüchen 3 bis 5, **dadurch gekennzeichnet, daß** die Trennwand als 0,5 bis 3 mm, starkes Blech lose zwischen den einzelnen Packungen angebracht wird.

7. Trennwandkolonne nach den Ansprüchen 4 bis 6, **dadurch gekennzeichnet, daß** die seitliche Abdichtung der Trennwände durch federnde Dichtlippen erfolgt.

8. Trennwandkolonne nach Ansprüchen 1 bis 7, **dadurch gekennzeichnet, daß** sie als Bodenkolonne ausgeführt ist.

9. Verfahren zur destillativen Auftrennung eines Gemisches in 3 oder mehr Fraktionen unter Verwendung einer Trennwandkolonne gemäß Ansprüche 1 bis 8.

10. Verfahren gemäß Anspruch 9, **dadurch gekennzeichnet, daß** man die Trennwandkolonne so betreibt, daß der Druck auf der Entnahmeseite größer oder gleich groß ist wie auf der Zulaufseite.

## Claims

1. A dividing wall column for separating a mixture into 3 or more fractions by distillation, wherein at least one dividing wall is detachably attached within the dividing wall column.

2. A dividing wall column as claimed in claim 1, wherein the dividing wall or dividing walls are loosely attached in guide rails on the column walls.

3. A dividing wall column as claimed in claim 1 or 2, wherein the dividing wall column contains packings for separating mixtures.

4. A dividing wall column as claimed in any of claims 1 to 3, wherein the dividing wall column contains arranged packings, in which the longitudinally subdividing dividing walls are each attached to one side of the packing layer as from 0.1 to 3 mm thick sheets.

5. A dividing wall column as claimed in claim 4, wherein these sheets extend at the top or bottom end from 1 to 10 mm beyond the packing layer, and, at the bottom end of the sheet, have a from 10 to 20 mm wide and from 0.1 to 2 mm thick sheet strip which is joined only at its top edge to the dividing wall in such a way that when packing layers are stacked one above the other, a roof-shaped, at least partially sealing overlapping is formed which prevents liquid from crossing over from one side to the other side of the dividing wall and is also sealed sufficiently tightly against the crossing over of vapors.

6. A dividing wall column as claimed in any of claims 3 to 5, wherein the dividing wall is loosely attached as a from 0.5 to 3 mm thick sheet between the individual packings.

7. A dividing wall column as claimed in any of claims 4 to 6, wherein the dividing walls are laterally sealed by sprung sealing lips.

8. A dividing wall column as claimed in any of claims 1 to 7, wherein it is constructed as a tray column.

9. A process for separating a mixture into 3 or more fractions by distillation, using a dividing wall column as claimed in any of claims 1 to 8.

10. A process as claimed in claim 9, wherein the dividing wall column is operated in such a manner that the pressure on the takeoff side is greater than or equal to that on the feed side.

## Revendications

1. Colonne de rectification pour la séparation en continu par distillation d'un mélange en 3 fractions ou plus, **caractérisée en ce qu'**au moins une paroi de séparation est montée de façon désolidarisable à l'intérieur de la colonne de rectification.

2. Colonne de rectification selon la revendication 1, **caractérisée en ce que** la paroi de séparation ou les parois de séparation sont disposées de façon lâche dans des glissières de guidage montées sur les parois de colonne.

3. Colonne de rectification selon les revendications 1 à 2, **caractérisée en ce que** la colonne de rectification contient des garnissages pour la séparation d'un mélange.

4. Colonne de rectification selon les revendications 1 à 3, **caractérisée en ce que** la colonne de rectification contient des garnissages ordonnés, pour lesquels les parois de séparation agissant comme subdivision longitudinale sont chacune montées sur un côté de la couche de garnissage, sous forme de tôles, d'épaisseur de 0,1 à 3 mm.

5. Colonne de rectification selon la revendication 4, **caractérisée en ce que** ses tôles dépassent sur l'extrémité supérieure ou inférieure de 1 à 10 mm de la couche de garnissage, à l'extrémité inférieure de la tôle, elle présente une bande en tôle d'une largeur de 10 à 20 mm et d'une épaisseur de 0,1 à 2 mm, reliée à son bord supérieur à la paroi de séparation uniquement de manière à créer un chevauchement au moins partiellement à effet d'étanchéité, en forme de toit, lorsque les couches de garnissage sont empilées les unes sur les autres, ce chevauchement empêchant un débordement de liquide d'un côté à l'autre de la paroi de séparation et présente également une étanchéité de valeur suffisante contre tout franchissement par les buées.

6. Colonne de rectification selon les revendications 3 à 5, **caractérisée en ce que** la paroi de séparation, réalisée sous la forme d'une tôle d'une épaisseur de 0,5 à 3 mm, est montée de façon lâche entre les différents garnissages.

7. Colonne de rectification selon les revendications 4 à 6, **caractérisée en ce que** l'étanchéité latérale des parois de séparation est effectuée au moyen de lèvres d'étanchéité élastiques.

8. Colonne de rectification selon les revendications 1 à 7, **caractérisée en ce qu'**elle est configurée sous forme de colonnes à plateaux.

9. Procédé de séparation par distillation d'un mélange en 3 fractions ou plus, avec utilisation d'une colonne de rectification selon les revendications 1 à 8.

10. Procédé selon la revendication 9, **caractérisé en ce qu'**on fait fonctionner la colonne de rectification de manière que la pression du côté prélèvement soit supérieure ou égale à celle que l'on a du côté alimentation.
